# DEMANDE DE BREVET EUROPEEN

(11) **EP 4 520 640 A1**
(43) Date de publication de la demande: **12.03.2025**
(21) Numéro de dépôt: 23315340.2
(22) Date de dépôt: 05.09.2023
(51) Int. Cl.: B62D 47/00, B62D 31/00, B62D 61/08, B62D 61/10

(54) **VEHICULE VERTICAL**

(71) Demandeur: Kan, Luc, Taipei City 11156 (TW)
(72) Inventeur: Kan, Luc, Taipei City 11156 (TW)
(74) Mandataire: Hirsch & Associés

(57) **Abrégé**

L'invention concerne un nouveau paradigme de véhicule à destination urbaine et unipersonnelle. Ce véhicule (1) est à extension principale verticale. Il présente une hauteur (H) supérieure à sa largeur (W) et à sa longueur (L).

## Description

### Domaine technique

L'invention concerne un véhicule de transport unipersonnel, principalement urbain, utilisable en tout temps et comportant des roues.

### Technique antérieure

Il est connu, pour les déplacements urbains, d'utiliser la marche, le vélo, le cyclomoteur, le vélomoteur, la voiture, les transports en communs et d'autres moyens plus récents tels que le E-scooter, la trottinette, éventuellement électrique, et d'autres.

La marche et le vélo nécessitent un effort physique et ne sont donc pas accessibles à tous. Le cyclomoteur, le vélomoteur ne sont pas protégés et sont moins agréables à utiliser par mauvaise météo. Le cyclomoteur, le vélomoteur, la voiture et les transports en commun sont généralement polluants et nécessitent des aménagements importants.

Aussi, il est recherché un véhicule alternatif pour adresser la mobilité urbaine proche, typiquement du « dernier kilomètre ».

### Résumé de l'invention

Pour cela, l'invention a pour objet un véhicule, comportant des roues et dont la hauteur est supérieure à la largeur et à la longueur.

Des caractéristiques ou des modes de réalisation particuliers, utilisables seuls ou en combinaison, sont :pour ledit véhicule les suivantes
- sa hauteur est supérieure à la somme de sa largeur et de sa longueur,
- sa hauteur est au moins égale à 210 cm,
- la largeur est au plus égale à 78 cm et la longueur est au plus égale à 120 cm,
- le véhicule comprend une carrosserie complète,
- le véhicule comprend trois à six roues,
- le véhicule comprend trois roues, soit deux roues arrière fixes latérales et une roue avant centrale directrice,
- afin d'augmenter le polygone de sustentation, la surface de la base du véhicule est supérieure à sa surface sommitale ,
- la présence combinée d'un polygone de sustentation relativement important et de 5 ou 6 roues contribue à une meilleure sustentation du véhicule
- le véhicule comprend encore un organe de pilotage parmi un joystick et/ou un guidage visuel et/ou un guidage vocal et/ou un guidage à distance et/ou un guidage automatique,
- le véhicule comprend encore une motorisation électrique,
- les éléments assurant la motorisation électrique sont situés dans la partie basse du véhicule et contribuent ainsi à abaisser le centre de gravité du véhicule et donc à assurer une bonne sustentation du véhicule;
- le véhicule comprend encore un système de navigation et des capteurs de proximité afin de pouvoir appréhender dynamiquement son environnement,
- la puissance de la motorisation est suffisamment faible pour ne pas nécessiter d'autorisation ou de permis particulier,
- le véhicule comprend encore un dispositif de montée d'escalier,
- le véhicule comprend encore un système de communication avec ses homologues de manière à pouvoir fonctionner en train virtuel, un véhicule étant maitre et guide et les autres véhicules étant esclaves et suiveurs successifs d'un véhicule précédent.

### Brève description des dessins

L'invention sera mieux comprise à la lecture de la description qui suit, faite uniquement à titre d'exemple, et en référence aux figures en annexe dans lesquelles :
[Fig. 1] montre, en vue perspective, un véhicule selon l'invention,
[Fig. 2] montre, en vue perspective, le véhicule de la figure 1, selon un autre point de vue,
[Fig. 3] montre, en vue perspective, un train de véhicules.

### Description des modes de réalisation

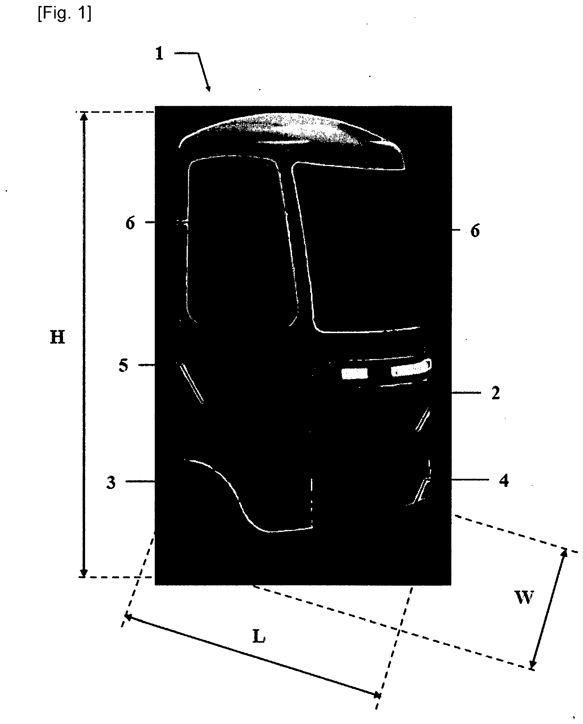

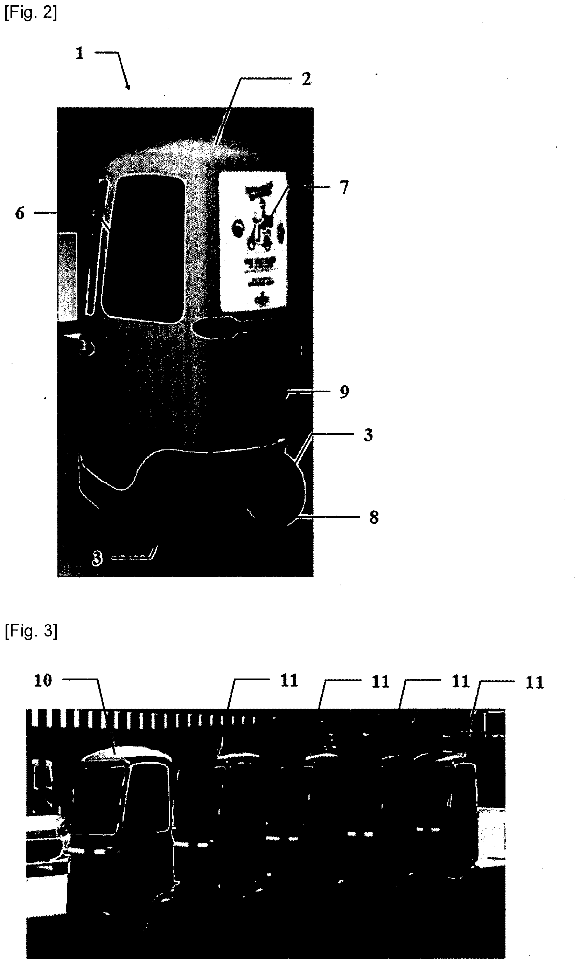

En référence aux figures 1 et 2, l'invention concerne un nouveau paradigme de véhicule 1. Un tel véhicule 1 est plus particulièrement destiné au transport de proximité, en commutation urbaine. Il est plus particulièrement destiné au transport de personne et est prévu pour accueillir une personne, quoiqu'il soit possible que s'ajoute la présence d'un enfant.

Selon une caractéristique sa hauteur H est sa plus grande dimension. Sa hauteur H est supérieure à sa largeur W et est supérieure à sa longueur L. Dans la présente, les dimensions : hauteur H, longueur L et largeur W s'entendent hors tout.

Selon une autre caractéristique, la hauteur H du véhicule 1 est supérieure à la largeur W additionnée à la longueur L.

Selon une autre caractéristique, cette hauteur H est au moins égale à 210 cm. Ainsi, le véhicule 1 peut, et est prévu pour, accueillir une personne debout et éventuellement un enfant. Cette configuration particulière présente encore l'avantage d'une extension principale verticale et par voie de conséquence une empreinte au sol par passager relativement réduite, comparativement à d'autres moyens de transport urbains. Ceci est évident si l'on compare à d'autres moyens de transport unipersonnel, tel que vélo ou cyclomoteur et reste vrai pour un quart ou cinquième du parc de véhicules automobiles.

Selon une autre caractéristique, plus particulièrement illustrée aux figures 1 et 2, la largeur W est au plus égale à 78 cm et la longueur L est au plus égale à 120 cm. Il peut être vérifié la propriété de la revendication 2 : la largeur W de 78 cm additionnée à la longueur L de 120 cm est égale à 198 cm, qui est bien inférieure à 210 cm de la hauteur H.

L'accueil est principalement prévu pour une personne debout et éventuellement un enfant. La position debout est avantageuse en ce qu'elle mobilise la personne transportée. De plus un positionnement de la tête de la personne en hauteur est favorable pour une meilleure perception de l'environnement et donc pour le pilotage.

Le véhicule 1 peut encore comprendre un siège. Il peut servir à une personne assise que la longueur L du véhicule 1 permet d'accueillir. Ce siège est réglable afin d'éventuellement supporter une personne debout en position assis-debout.

Le siège est avantageusement complété par une ceinture de sécurité et/ou un airbag afin de garantir la sécurité de la personne transportée.

Le véhicule 1 peut encore comprendre une table escamotable afin d'offrir un espace de travail de type bureau. Ceci peut être utilisé, véhicule 1 à l'arrêt, ou en mode de navigation autonome. Ceci permet de transformer le véhicule 1 en bureau d'appoint et/ou mobile, pour un télétravailleur ou encore pour un représentant en déplacement ou pour accompagner un enfant à l'école..

Le véhicule 1 est prévu pour être utilisé en toutes conditions climatiques. Aussi, le véhicule 1 comprend une carrosserie 2 complète. Il est de plus équipé d'équipements de régulation de la température : chauffage et/ou climatisation et avantageusement d'au moins un essuie-glace et/ou de dispositifs de dégivrage des vitres.

Le véhicule 1 étant entièrement carrossé, il comprend avantageusement au moins une portière 5 afin de permettre l'entrée et la sortie de la personne transportée ou du fret. Il comprend encore avantageusement, au moins une vitre 6 afin de permettre à la personne embarquée de voir son environnement. Selon un mode de réalisation possible et illustré, une vitre frontale ou pare-brise est complétée par une ou deux vitres latérales. Il est encore possible de disposer une vitre arrière. Alternativement la vitre arrière peut être remplacée par une tôle, tel qu'illustré.

Dans ce cas, la vision arrière peut être remplacée par une caméra renvoyant sur un écran d'affichage disposé dans le véhicule 1 ou par des rétroviseurs Une telle configuration tôlée peut avantageusement être utilisée pour support d'un affichage, tel un encart publicitaire 7. Ceci s'applique aussi aux autres espaces tôlés. Les fenêtres 6 couvrent préférentiellement la partie haute du véhicule 1, la partie basse étant tôlée.

La fermeture complète par une carrosserie 2 permet d'offrir une sécurité mécanique contre les chocs, une sécurité mécanique contre le vol et encore une sécurité sanitaire empêchant toute contamination entrante ou sortante, par exemple dans le cas d'un transport de malade ou d'un transport de personne saine en environnement contaminé.

Afin d'être mobile, le véhicule 1 comprend au moins trois roues 3, 4. Trois est un minimum pour assurer une sustentation stable, plus est possible et peut même atteindre 6 roues ou plus équidistantes les une des autres.. Pour une architecture tricycle, le véhicule 1 comprend préférentiellement deux roues arrière 3 et une roue avant 4, tel qu'illustré. Les roues arrière 3 sont préférentiellement disposées latéralement, chacune en bordure de l'empreinte au sol. Les roues arrière 3 sont avantageusement fixes. La roue avant 4 est préférentiellement centrale. La roue avant 4 est avantageusement directrice afin de permettre une mobilité étendue du véhicule 1. Il est évident que 5 ou 6 roues confèrent au véhicule une meilleure sustentation.

Afin d'augmenter le polygone de sustentation, la surface de la base du véhicule est supérieure à sa surface sommitale

La présence combinée d'un polygone de sustentation relativement important et de 5 ou 6 roues contribue à une meilleure sustentation du véhicule

Il est encore possible d'adapter le train de roue afin de conférer au véhicule des propriétés de mobilité sur l'eau, le sable ou la neige.

Il est souhaité de permettre un pilotage intuitif, accessible à tous, sans compétence particulière ou entrainement préalable. Il est encore souhaité de rendre le pilotage accessible à des personnes handicapées, que le handicap soit moteur, visuel ou auditif.

Pour cela le véhicule 1, selon une autre caractéristique, comprend un organe de pilotage. Cet organe de pilotage est préférentiellement destiné à la personne embarquée et est préférentiellement disposé dans l'habitacle. Il peut s'agir d'un joystick. Un joystick est utilisable de manière intuitive par une personne disposant d'au moins un bras/une main.

Il peut encore, alternativement ou complémentairement, s'agir d'un organe de pilotage par guidage visuel accessible à des personnes malentendantes. Il peut encore, alternativement ou complémentairement, s'agir d'un organe de pilotage par guidage vocal accessible à des personnes malvoyantes.

Pour des personnes plus handicapées ou en incapacité, ou encore pour du fret, le véhicule 1 peut être téléopéré au moyen d'un guidage à distance.

Enfin, le véhicule 1 peut être piloté par un guidage automatique. Ce mode autonome peut être contrôlé depuis le véhicule 1 par son passager ou à distance.

Pour des raisons écologiques et d'utilisation des dernières technologies de mobilité, le véhicule 1 est mobilisé par une motorisation électrique. Le ou les moteurs 8 électriques sont avantageusement disposés, au bas du véhicule 1, entre les roues 3, 4, afin d'abaisser le centre de gravité du véhicule 1.

La batterie ou pack batterie 9 est avantageusement disposé au bas du véhicule 1, sur ou sous le ou les moteurs 8.

Le pack batterie 9 est avantageusement accessible par une trappe disposée à l'arrière du véhicule 1. Le pack batterie 9 est avantageusement conçu pour être aisément branché et/ou débranché par l'utilisateur du véhicule 1, de préférence sans outillage. Le pack batterie 9 peut être rechargé in situ dans le véhicule 1. Ce mode présente l'inconvénient d'immobiliser le véhicule 1. Préférentiellement la recharge se fera hors ligne sur une station de charge et le ravitaillement en énergie s'effectue par échange du pack batterie 9. Il est prévu pour soutenir le véhicule 1, un service de livraison/échange de pack batterie 9. L'échange peut aussi se faire entre usagers.

Selon une autre caractéristique, le véhicule 1 comprend un système de navigation et des capteurs de proximité afin de pouvoir appréhender dynamiquement son environnement.

Ces deux composants peuvent être utilisés pour assister un pilote embarqué dans ses manoeuvres, par exemple en assurant une surveillance et une assistance à la gestion de trajectoire, une assistance au stationnement ou encore une anti-collision automatique, de manière à renforcer la sécurité, tant de l'utilisateur que/ des autres usagers, cyclistes, piétons ou autres. Cette sécurité permet d'utiliser le véhicule 1 y compris dans des zones habituellement réservées aux piétons : centres commerciaux, zones piétonnes.

Ces deux composants peuvent encore permettre, dans le cadre d'un mode de pilotage autonome, de modéliser dynamiquement l'environnement du véhicule 1 afin de gérer le pilotage de proximité, y compris l'assiette du véhicule 1 et l'anti-collision et la navigation en fonction d'un objectif final à rejoindre.

Il est souhaité de pouvoir rendre utilisable le véhicule 1 par une grande frange de la population. Aussi, il est recherché de rester de manière administrative dans des conditions ne nécessitant ni autorisation ni permis particulier. Ainsi, selon une autre caractéristique, la puissance de la motorisation est suffisamment faible pour, dans les pays visés, ne pas entrai ner de limitation d'âge ou de permis.

Afin d'être mieux adapté aux obstacles possiblement rencontrés en environnement urbain, selon une autre caractéristique, le véhicule 1 comprend un dispositif de montée d'escalier, rendant le véhicule 1 capable de franchir un trottoir ou encore un escalier.

Selon une autre caractéristique, le véhicule 1 comprend encore au moins un système de communication. Un système de communication est à l'attention de l'utilisateur en ce qu'il lui apporte des capacités de communication audio et/ou vidéo avec d'autres réseaux : GSM, IP, etc. Ceci permet ainsi à un utilisateur d'utiliser son véhicule 1 pour suivre une vidéoconférence, écouter la radio ou encore se connecter à internet.

Selon une autre caractéristique, un système de communication est dédié à une communication avec un ou plusieurs serveurs d'information: navigation, état du trafic, centrale de réservation, etc.

Selon une autre caractéristique, un système de communication est dédié à une communication entre véhicules 1. Ceci peut concerner les véhicules 1 homologues ou encore d'autres flottes de véhicules 1.

Un exemple d'application d'un tel système de communication entre véhicules 1 homologues est la mise en place d'un train, virtuel en ce qu'il est sans attelage, comprenant plusieurs véhicules 1. Dans ce mode de fonctionnement, un véhicule 1 est le véhicule maitre 10. Il définit la trajectoire en ce qu'il est piloté. Le véhicule maitre 10 guide les autres véhicules 1. Les véhicules suiveurs sont des véhicules esclaves 11 et suivent, soit le véhicule maître 10 pour le deuxième véhicule, soit un véhicule esclave 11 suivant pour les véhicules esclaves 11 successifs. Ceci est plus particulièrement illustré à la figure 3. Le système de communication permet de définir les rôles, maître 10, ou esclave 11 de rang n. Ensuite les systèmes de navigation utilisent leurs détecteurs pour trouver et suivre le véhicule 10, 11 précédent, de manière adaptative. Le système de communication permet encore de synchroniser et d'entretenir le lien virtuel entre un véhicule et son précédent/suivant, par exemple par échange de position relative ou-absolue.

Sous l'angle des diverses possibilités d'utilisation commerciale offertes par le véhicule selon la présente inventions on citera, de façon non limitatives ;
✔ La possibilité d'accumuler des crédits par kilomètres parcourus ;
✔ La possibilité d'accumuler des crédits par le nombre d'échanges de batteries , ✔ -La possibilité de louer le véhicule aux particuliers ou entreprises tels que AirBnB modèle, à des société telles que Uber, Hertz, et autres ;
✔ La possibilité de bénéficier des revenues résultant de la charge ou recharge des batteries ; (soit stations de charges fixes par solaire, grid ou demeure) et la location de batteries ;
✔ La possibilité d'obtenir des revenus résultant d'affichage publicitaire sur le véhicule
✔ La possibilité de franchiser la vente de véhicules, l'utilisation ou la construction.

L'invention a été illustrée et décrite en détail dans les dessins et la description précédente. Celle-ci doit être considérée comme illustrative et donnée à titre d'exemple et non comme limitant l'invention à cette seule description. De nombreuses variantes de réalisation sont possibles.

### Liste des signes de référence

1 : véhicule,
2 : carrosserie,
3 : roue arrière,
4 : roue avant,
5 : portière,
6 : fenêtre/vitre,
7 : encart publicitaire,
8 : moteur,
9 : batterie,
10 : véhicule maître,
11 : véhicule esclave.

## Revendications

1. Véhicule (1), muni de roues, , ***caractérisé en ce que*** la hauteur (H) du véhicule est supérieure à sa largeur (W) et à sa longueur (L).

2. Véhicule (1) selon la revendication 1, où sa hauteur (H) est supérieure à la somme de sa largeur (W) et de sa longueur (L).

3. Véhicule (1) selon l'une quelconque des revendications 1 ou 2, où la hauteur (H) est au moins égale à 210 cm.

4. Véhicule (1) selon l'une quelconque des revendications 1 à 3, où la largeur (W) est au plus égale à 78 cm et la longueur (L) est au plus égale à 120 cm.

5. Véhicule (1) selon l'une quelconque des revendications 1 à 4, comprenant une carrosserie (2) complète.

6. Véhicule (1) selon l'une quelconque des revendications 1 à 4 ? dont la surface de la base du véhicule est supérieure à sa surface sommitale

7. Véhicule (1) selon l'une quelconque des revendications 1 à 5, comprenant trois à six roues.

8. Véhicule (1) selon l'une quelconque des revendications 1 à 5, comprenant trois roues (3, 4), soit deux roues arrière (3) fixes latérales et une roue avant (4) centrale directrice.

9. Véhicule (1) selon l'une quelconque des revendications 1 à 6, comprenant encore un organe de pilotage parmi un joystick et/ou un guidage visuel et/ou un guidage vocal et/ou un guidage à distance et/ou un guidage automatique.

10. Véhicule (1) selon l'une quelconque des revendications 1 à 7, comprenant encore une motorisation électrique.

11. Véhicule (1) selon l'une quelconque des revendications 1 à 8, comprenant encore un système de navigation et des capteurs de proximité afin de pouvoir appréhender dynamiquement son environnement.

12. Véhicule (1) selon l'une quelconque des revendications 1 à 9, où la puissance de la motorisation est suffisamment faible pour ne pas nécessiter d'autorisation ou de permis particulier.

13. Véhicule (1) selon l'une quelconque des revendications 1 à 10, comprenant encore un dispositif de montée d'escalier.

14. Véhicule (1) selon l'une quelconque des revendications 1 à 11, comprenant encore un système de communication avec ses homologues de manière à pouvoir fonctionner en train virtuel, un véhicule étant maitre (10) et guide et les autres véhicules étant esclaves (11) et suiveurs successifs d'un véhicule (1) précédent. ]
